# EUROPEAN PATENT SPECIFICATION

(11) **EP 3 985 539 B1**
(45) Date of publication and mention of the grant of the patent: **27.12.2023**
(21) Application number: 21201102.7
(22) Date of filing: 06.10.2021
(51) Int. Cl.: G06F 21/62, H04L 9/00, G06N 3/084, G06N 3/10

(54) **SYSTEM AND METHOD FOR CONVERTING MACHINE LEARNING ALGORITHM, AND ELECTRONIC DEVICE**
SYSTEM UND VERFAHREN ZUR UMWANDLUNG EINES MASCHINENLERNALGORITHMUS UND ELEKTRONISCHE VORRICHTUNG
SYSTÈME ET PROCÉDÉ DE CONVERSION D'UN ALGORITHME D'APPRENTISSAGE AUTOMATIQUE ET DISPOSITIF ÉLECTRONIQUE

(30) Priority: 15.10.2020 CN 202011099979
(43) Date of publication of application: 20.04.2022
(73) Proprietor: Beijing Realai Technology Co., Ltd, Haidian District Beijing 100084 (CN)
(72) Inventor: XU, Shizhen, 100084 Beijing (CN); WANG, Kunpeng, 100084 Beijing (CN); ZHU, Xiaofang, 100084 Beijing (CN); LIU, Liyuan, 100084 Beijing (CN); TANG, Jiayu, 100084 Beijing (CN); TIAN, Tian, 100084 Beijing (CN)
(74) Representative: Kolster Oy Ab

(56) References cited:
- CN-A- 111 522 669
- DANIEL J BEUTEL ET AL: "Flower: A Friendly Federated Learning Research Framework", ARXIV.ORG, CORNELL UNIVERSITY LIBRARY, 201 OLIN LIBRARY CORNELL UNIVERSITY ITHACA, NY 14853, 28 July 2020 (2020-07-28), XP081728603,
- SONG LEI ET AL: "Privacy-Preserving Unsupervised Domain Adaptation in Federated Setting", IEEE ACCESS, IEEE, USA, vol. 8, 3 August 2020 (2020-08-03), pages 143233-143240, XP011804655, DOI: 10.1109/ACCESS.2020.3014264 [retrieved on 2020-08-12]

## Description

### FIELD

The present disclosure relates to the technical field of computer, and particularly, to a system and a method for converting a machine learning algorithm, and an electronic device.

### BACKGROUND

Various training data used to drive development of AI models (such as Alpha Go, GPT-3) are often scattered in various institutions, so distributed privacy protection machine learning (also called federated learning) algorithm may be used to solve a problem of data privacy protection in geographically distributed data collection and model training.

One data segmentation manner in the distributed privacy protection machine learning algorithm is vertical segmentation. That is, data is distributed among different participants according to characteristics. For the distributed privacy protection machine learning algorithm having the vertical segmentation, an existing conversion method is to first implement an algorithm in an ordinary serial version, and then debug the algorithm and transplant it to a distributed privacy protection scenario, thereby machine converting the ordinary machine learning algorithm into the distributed privacy protection machine learning algorithm.

However, the above method has main problems of poor compatibility, high coupling and poor performance. Poor compatibility means that the distributed privacy protection machine learning algorithm, as an extension of the machine learning algorithm, has poor compatibility with a mainstream deep learning framework and is not convenient for a developer to use. High coupling means that the machine learning algorithm and a privacy protection computing protocol in the current distributed privacy protection scenario are tightly coupled, and almost every development requires careful analysis of an entire process of the original machine learning algorithm. High coupling also bring problems such as difficulty in application transplantation, difficulty in algorithm iteration, and poor scalability. Poor performance means that the distributed privacy protection machine learning algorithm is generally 100 or even 1000 times slower than the original stand-alone machine learning algorithm, which brings difficulties to actual implementation of the distributed privacy protection machine learning algorithm.

DANIEL J BEUTEL ET AL: "Flower: A Friendly Federated Learning Research Framework", ARXIVORG, CORNELL UNIVERSITY LIBRARY, 201 OLIN LIBRARY CORNELL UNIVERSITY ITHACA, NY 14853, 28 July 2020 (2020-07-28), XP081728603 discloses that Federated Learning (FL) has emerged as a promising technique for edge devices to collaboratively learn a shared prediction model, while keeping their training data on the device, thereby decoupling the ability to do machine learning from the need to store the data in the cloud. However, FL is difficult to implement and deploy in practice, considering the heterogeneity in mobile devices, e.g., different programming languages, frameworks, and hardware accelerators. Although there are a few frameworks available to simulate FL algorithms (e.g., TensorFlow Federated), they do not support implementing FL workloads on mobile devices. Furthermore, these frameworks are designed to simulate FL in a server environment and hence do not allow experimentation in distributed mobile settings for a large number of clients. The paper presents Flower¹, a FL framework which is both agnostic towards heterogeneous client environments and also scales to a large number of clients, including mobile and embedded devices. Flower's abstractions let developers port existing mobile workloads with little overhead, regardless of the programming language or ML framework used, while also allowing researchers flexibility to experiment with novel approaches to advance the state-of-the-art. The paper describes the design goals and implementation considerations of Flower and show our experiences in evaluating the performance of FL across clients with heterogeneous computational and communication capabilities.

SONG LEI ET AL: "Privacy-Preserving Unsupervised Domain Adaptation in Federated Setting", IEEE ACCESS, IEEE, USA, vol. 8, 3 August 2020 (2020-08-03), pages 143233-143240, XP011804655, DOI: 10.1109/ACCESS.2020.3014264 [retrieved on 2020-08-12] discloses that the training of deep neural networks relies on massive high-quality labeled data which is expensive in practice. To tackle this problem, domain adaptation is proposed to transfer knowledge from label-rich source domain to unlabeled target domain to learn a classifier that can well classify target data. However, people don't consider privacy issues in domain adaptation. The paper introduces a novel method that builds an effective model without sharing sensitive data between source and target domain. Target domain party can benefit from label-rich source domain without revealing its privacy data. The traditional domain adaptation is transferred into a federated setting, where a global server contains a shared global model. Additionally, homomorphic encryption (HE) algorithm is used to guarantee the computing security. Experiments show that our method performs effectively without reducing the accuracy. This method can achieve secure knowledge transfer and privacy-preserving domain adaptation.

CN111522669A discloses a transverse federated learning system optimization method, device and equipment, and a readable storage medium. The method comprises the steps of obtaining equipment resource information of each participating equipment participating in transverse federated learning; configuring calculation task parameters in the federated learning model training process corresponding to each participating equipment according to each equipment resource information, wherein the calculation task parameters comprise a predicted processing time step length and/or a predicted processing batch size; and correspondingly sending the calculation task parameter to each participation equipment, so that each participation equipment executes a federated learning task according to the respective calculation task parameter. The contribution brought by the data of each data party is utilized in federated learning, and the overall efficiency of the federated learning system is improved.

### SUMMARY

In order to solve the above technical problems or at least partially solve the above technical problems, a system and a method for converting a machine learning algorithm, and an electronic device are provided in the present disclosure.

A system for converting a machine learning algorithm is provided according to the disclosure. The system includes a programmatic interface layer, a data-flow diagram conversion layer, and a compilation and execution layer arranged from top to bottom. The data-flow diagram conversion layer includes an operator placement and evaluation module and a data-flow diagram dividing and scheduling module. The programmatic interface layer is configured to construct a data-flow diagram of an original machine learning algorithm based on a preset data flow generation tool. The data flow generation tool includes a Google-JAX computing framework. The data-flow diagram includes a series of operators. The operator placement and evaluation module is configured to calculate placement costs of each operator in the data-flow diagram when the operator is executed by different participants. The data-flow diagram dividing and scheduling module is configured to divide the data-flow diagram into multiple sub-diagrams according to the placement costs, and schedule each of the sub-diagrams to a target participant for execution. The compilation and execution layer is configured to compile the sub-diagrams into a new data-flow diagram based on a greedy algorithm strategy, and generate an instruction for each operator in the new data-flow diagram to obtain a distributed privacy protection machine learning algorithm.

In an embodiment, the operator includes a source operand. For any one of the operators in the data-flow diagram, the operator placement and evaluation module is further configured to: calculate an operator calculation cost of the operator, a communication cost of the source operand in the operator, and a calculation cost of the source operand in the operator by using a preset cost performance model, where the operator calculation cost indicates a calculation cost of calculation of the operator in plaintext or ciphertext, the communication cost of the source operand indicates whether the source operand needs communication and whether an communication object is plaintext or ciphertext; and determine placement costs of the operator when the operator is executed by different participants based on the operator calculation cost, the communication cost of the source operand and the calculation cost of the source operand.

In an embodiment, the data-flow diagram dividing and scheduling module is further configured to: traverse all the operators in the data-flow diagram according to a breadth-first search algorithm; and for any operator, determine a target participant for executing the operator according to a minimum placement cost of the operator; mark, in a process of the traversing, the target participant corresponding to each of the operators in sequence to obtain marking information, where the marking information indicates a correspondence between the operators and the target participants and indicates a topological order in which the operators are traversed; divide the data-flow diagram into multiple sub-diagrams according to the marking information, where each sub-diagram includes multiple which are corresponding to the same target participant and which are consecutive after the operators are topologically ordered; and schedule, for each of the sub-diagrams, the target participant corresponding to the sub-diagram to execute the sub-diagram according to the marking information.

In an embodiment, the data-flow diagram dividing and scheduling module is further configured to: add, if it is determined that the source operand in a current operator needs communication in a process of calculating the communication cost of the source operand, a communication operator before a calculation process of the current operator to obtain a new operator; add, if it is determined that the source operand in the current operator needs encrypted communication in the process of calculating the communication cost of the source operand, an encryption operator before the added communication operator to obtain a new operator; and transform a sub-diagram containing the new operator based on the new operator.

In an embodiment, the data-flow diagram conversion layer further includes a sub-diagram optimization module configured to optimize a plaintext calculation part of the sub-diagram.

In an embodiment, the compilation and execution layer includes a ciphertext calculation primitive module, a communication primitive module and a calculation and compilation module. The ciphertext calculation primitive module is configured to generate a calculation instruction for a first target operator in the new data-flow diagram by using a semi-homomorphic encryption algorithm library or a fully homomorphic encryption algorithm library. The first target operator is an operator on which encryption/decryption calculation and/or ciphertext calculation is to be performed. The communication primitive module is configured to generate a calculation instruction for a second target operator by using a communication library. The second target operator is an operator used for communication between different participants. The calculation and compilation module is configured to generate a calculation instruction for a third target operator by using a preset compilation tool. The third target operator is an operator on which plaintext calculation is to be performed.

In an embodiment, the compilation and execution layer is further configured to perform following compiling operations on each of the operators in the new data-flow diagram based on the greedy algorithm strategy: determining whether the source operand in a current operator communicates, whether a destination operand in the current operator communicates and whether an encryption status of the current operator is the same as an encryption status of an existing to-be-compiled operator cache, where the destination operand is a result operand calculated from the source operand in the operator; appending the current operator to a new to-be-compiled operator cache, in a case that the source operand in the current operator does not communicate, the destination operand in the current operator does not communicate and the encryption status of the current operator is the same as the encryption status of the existing to-be-compiled operator cache; jointly compiling the current operator and the existing to-be-compiled operator cache and emptying the existing to-be-compiled operator cache, in a case that the source operand in the current operator does not communicate, the destination operand in the current operator communicates and the encryption status of the current operator is the same as the encryption status of the existing to-be-compiled operator cache; compiling the existing to-be-compiled operator cache and setting the current operator as a new to-be-compiled operator cache, in a case that the source operand in the current operator does not communicate, the destination operand in the current operator does not communicate and the encryption status of the current operator is different from the encryption status of the existing to-be-compiled operator cache, or in a case that the source operand in the current operator communicates, the destination operand in the current operator does not communicate and the encryption status of the current operator is different from the encryption status of the existing to-be-compiled operator cache, or in a case that the source operand in the current operator communicates, the destination operand in the current operator does not communicate and the encryption status of the current operator is the same as the encryption status of the existing to-be-compiled operator cache; compiling the existing to-be-compiled operator cache and the current operator separately and emptying the existing to-be-compiled operator cache, in a case that the source operand in the current operator does not communicate, the destination operand in the current operator communicates and the encryption status of the current operator is different from the encryption status of the existing to-be-compiled operator cache, or in a case that the source operand in the current operator communicates, the destination operand in the current operator communicates and the encryption status of the current operator is different from the encryption status of the existing to-be-compiled operator cache, or in a case that the source operand in the current operator communicates, the destination operand in the current operator communicates and the encryption status of the current operator is the same as the encryption status of the existing to-be-compiled operator cache.

A method for converting a machine learning algorithm is provided according to the disclosure. The method includes: constructing a data-flow diagram of an original machine learning algorithm based on a preset data flow generation tool, where the data flow generation tool includes a Google-JAX computing framework, and the data-flow diagram includes a series of operators; calculating placement costs of each operator in the data-flow diagram when the operator is executed by different participants; dividing the data-flow diagram into multiple sub-diagrams according to the placement costs, and scheduling each of the sub-diagrams to a target participant for execution; and compiling the sub-diagrams into a new data-flow diagram based on a greedy algorithm strategy, and generating an instruction for each operator in the new data-flow diagram to obtain a distributed privacy protection machine learning algorithm.

An electronic device is provided according to the disclosure. The electronic device includes the system for converting a machine learning algorithm described above.

Compared with the conventional technology, the technical solutions provided by the embodiments of the present disclosure have the following advantages.

The system and method for converting the machine learning algorithm, and the electronic device are provided by embodiments of the present disclosure. The system includes a programmatic interface layer, a data-flow diagram conversion layer, and a compilation and execution layer. The data-flow diagram conversion layer includes an operator placement and evaluation module and a data-flow diagram dividing and scheduling module. The programmatic interface layer is configured to construct a data-flow diagram of an original machine learning algorithm based on a preset data flow generation tool (such as a Google-JAX computing framework). The data-flow diagram includes a series of operators. The operator placement and evaluation module is configured to calculate placement costs of each operator in the data-flow diagram when the operator is executed by different participants. The data-flow diagram dividing and scheduling module is configured to divide the data-flow diagram into multiple sub-diagrams according to the placement costs, and schedule each of the sub-diagrams to a target participant for execution. The compilation and execution layer is configured to compile the sub-diagrams into a new data-flow diagram based on a greedy algorithm strategy, and generate an instruction for each operator in the new data-flow diagram to obtain a distributed privacy protection machine learning algorithm. In the conversion mode of the above algorithm, the programmatic interface layer and the compilation and execution layer support the existing deep learning frameworks, thereby improving compatibility with the mainstream deep learning framework. The process, from an operation that the programming interface layer generates the data-flow diagram of the original machine learning algorithm to an operation that the compilation and execution layer generates the new data-flow diagram and transforms the new data-flow diagram to obtain the distributed privacy protection machine learning algorithm, expresses a relationship between the machine learning algorithm and the corresponding distributed privacy protection machine learning algorithm from a perspective of the underlying data-flow diagram, and completes the automatic conversion between the machine learning algorithm and the corresponding distributed privacy protection machine learning algorithm through the data-flow diagram conversion. The data-flow diagram conversion is universal and can be adapted to multiple upper layer machine learning algorithms, thereby reducing coupling between the machine learning algorithm and a privacy protection computing protocol. The data-flow diagram conversion layer calculates the placement costs of the operators, and divides the data-flow diagram into the sub-diagrams according to the placement costs, and schedule each of the sub-diagrams to a target participant for execution. In this way, computing performance of the distributed privacy protection machine learning algorithm can be effectively improved.

### BRIEF DESCRIPTION OF THE DRAWINGS

The drawings herein are incorporated into the specification and constitute a part of the specification. The drawings show embodiments of the present disclosure. The drawings and the specification are used to explain the principle of the present disclosure.

In order to more clearly explain the embodiments of the present disclosure or the technical solutions in the conventional art, the drawings used in the description of the embodiments or the conventional art are briefly introduced below. Apparently, for those skilled in the art, other drawings can be obtained according to the provided drawings without any creative effort.
FIG. 1 is a schematic structural diagram of a system for converting a machine learning algorithm provided by an embodiment of the present disclosure;
FIG. 2 is a schematic diagram of a logistic regression algorithm provided by an embodiment of the present disclosure;
FIG. 3 is a schematic structural diagram of a system for converting a machine learning algorithm provided by another embodiment of the present disclosure;
FIG. 4 is a schematic diagram of a process of calculating placement cost provided by an embodiment of the present disclosure;
FIG. 5 is a schematic diagram of dividing and scheduling a data-flow diagram provided by an embodiment of the present disclosure; and
FIG. 6 is a flow chart of a compilation operation performed on the data-flow diagram provided by an embodiment of the present disclosure.

102-programmatic interface layer; 104 data-flow diagram conversion layer; 1042 operator placement and evaluation module; 1044 data-flow diagram dividing and scheduling module; 1046 sub-diagram optimization module; 106--compilation and execution layer; 1062 ciphertext calculation primitive module; 1064 communication primitive module; 1066 calculation and compilation module.

### DETAILED DESCRIPTION

In order to make the purposes, features, and advantage of the present disclosure more apparent and easy to understand, the technical solutions in the embodiments of the present disclosure will be described clearly and completely hereinafter. It should be noted that the embodiments of the present disclosure and the features in the embodiments can be combined with each other if there is no conflict.

In the following detailed description, numerous specific details are set forth in order to provide thorough understanding of the present disclosure. However, the present disclosure may also be implemented in other ways different from those described here. Obviously, the embodiments in the specification are only a part of the embodiments of the present disclosure, rather than all the embodiments.

Big data-driven AI applications such as Alpha Go and GPT-3 have demonstrated revolutionary practical effects in their respective fields. There is no doubt that a large amount of training data is one of the most important factors driving development and iteration of these AI models. But reality is that all kinds of data are often scattered in various institutions. Collecting these data for model training often faces risks in terms of privacy protection. Distributed privacy protection machine learning (also called federated learning) algorithm is one of solutions to solve geographically distributed data collection and model training.

A data segmentation manner of a distributed privacy protection machine learning algorithm may include horizontal segmentation which means that data is distributed among different participants according to ID, and vertical segmentation which means that data is distributed among different participants according to characteristics. For the horizontal segmentation, each participant owns the entire model, and model parameter update is communicated only in a privacy-protected manner (similar to data parallelism). For the vertical segmentation, each participant owns a part of the model, and multiple participants sequentially execute some sub-modules of a model process, intermediate results need to be communicated frequently in a privacy-preserving manner (similar to model parallelism). It should be noted that a design of the distributed privacy protection machine learning algorithm having vertical segmentation is more complicated. Because it needs to carefully analyze an entire algorithm process, schedule each sub-module to a participant, and use a multi-party secure computing solution/cryptography solution to make data of each participant not be directly or indirectly leaked to other participants during training.

For the distributed privacy protection machine learning algorithm having vertical segmentation, existing conversion solutions can be divided into following two categories.

The first category of the conversion solution is to manually construct a corresponding distributed privacy protection machine learning algorithm for each machine learning algorithm, manually specify a calculation logic and communication content of each participant, and use of cryptographic schemes throughout distributed privacy protection machine learning algorithm. An example of the first category of the conversion solution is Federated AI Technology Enabler (FATE).

The second category of the conversion solution is to reuse the mainstream deep learning framework, and use secret sharing as underlying implementation for operators in the distributed privacy protection machine learning algorithm. The second category of the conversion solution only supports secret sharing, a single multi-party secure computing solution. The second category of the conversion solution generally requires manual implementation of a backpropagation algorithm, forces all participants to execute operators that only need to be executed by a certain participant, and lacks analysis and scheduling of the entire process of the distributed privacy protection algorithm. An example of the second category of the conversion solution is TF-Encrypted framework.

In the above two categories of the conversion solutions, an existing development process of the distributed privacy protection machine learning algorithm is to first implement an algorithm in an ordinary serial version, and then debug the algorithm and transplant it to a distributed privacy protection scenario, thereby machine converting the ordinary machine learning algorithm into the distributed privacy protection machine learning algorithm. Transplantation refers specifically to use of a communication/computing interface provided in the conversion solutions to re-implement the calculation/communication logic of each participant, or to reconstruct a new data-flow diagram containing each participant according to a new operator provided by the framework. Transplantation is prone to errors and needs to be debugged in a distributed environment. Further, maintenance and update of the algorithm need to repeat this transplantation process.

In summary, the above solutions mainly have following three defects.
1. Poor compatibility. The mainstream deep learning framework has been accepted by a machine learning developer, and the operators and automatic backpropagation algorithm provided by the mainstream deep learning framework greatly facilitate development of a machine learning program. The distributed privacy protection machine learning algorithm, as an extension of the machine learning algorithm, is not well compatible with the mainstream deep learning framework and is not convenient for the developer to use.
2. High coupling. The machine learning algorithm and the privacy protection computing protocol in a current distributed privacy protection scenario are tightly coupled, and almost every development requires careful analysis of an entire process of the original machine learning algorithm. High coupling also bring problems such as difficulty in application transplantation, difficulty in algorithm iteration, and poor scalability.
3. Poor performance. The distributed privacy protection machine learning algorithm is generally 100 or even 1000 times slower than the original stand-alone machine learning algorithm, a reason is that the privacy protection protocol introduces a large number of communications operations, and multi-party secure computing solution operations /cryptographic solution operations, which brings difficulties to actual implementation of the distributed privacy protection machine learning algorithm.

Therefore, in order to improve at least one of the above-mentioned problems, a system and a method for converting a machine learning algorithm, and an electronic device are provided by embodiments of the present disclosure. The embodiments of the present disclosure are described in detail below.

### Embodiment 1

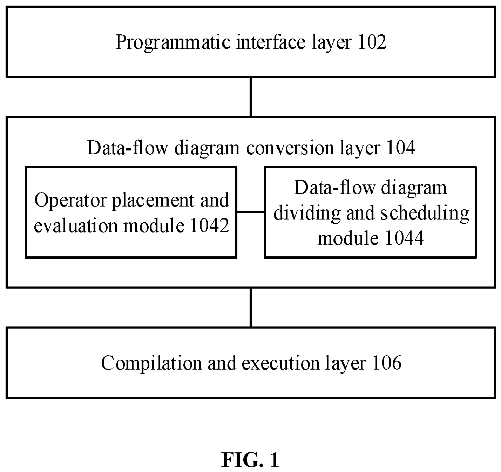

Referring to a schematic structural diagram of a system for converting a machine learning algorithm illustrated in FIG. 1, a system for converting a machine learning algorithm provided by an embodiment of the present disclosure includes a programmatic interface layer 102, a data-flow diagram conversion layer 104, and a compilation and execution layer 106 arranged from top to bottom. The data-flow diagram conversion layer includes, but not limited to, an operator placement and evaluation module 1042 and a data-flow diagram dividing and scheduling module 1044.

In order to better understand a working principle of the system, the three layers forming the system are described in detail as follows.

The programmatic interface layer is configured to construct a data-flow diagram of an original machine learning algorithm based on a preset data flow generation tool. The data-flow diagram includes a series of operators. Each operator includes: a source operand, an operator name and an output result. The output result is also called a destination operand, which is a result operand calculated from the source operand. The data flow generation tool includes a deep learning framework, such as Google-JAX computing framework, Tensor Flow, and PyTorch.

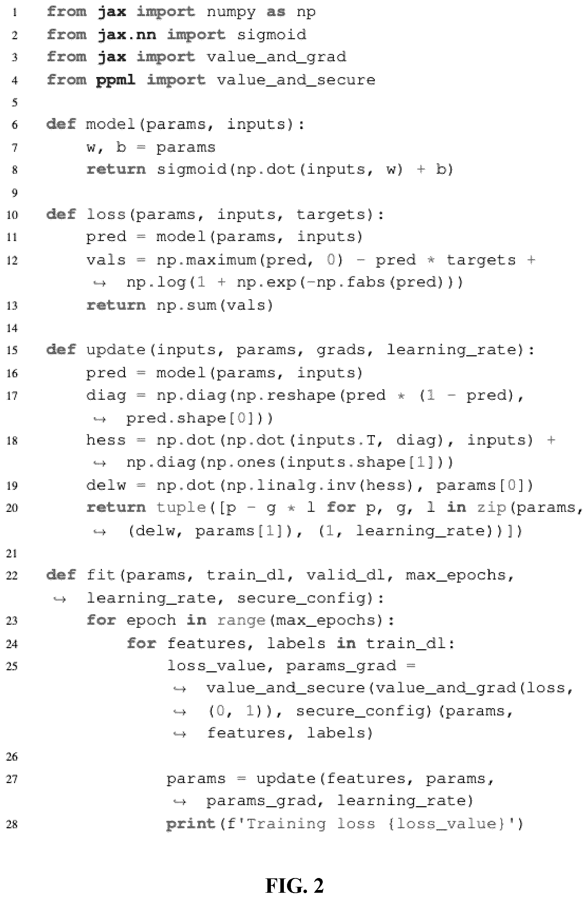

Specifically, the programmatic interface layer provides a large number of operator interfaces for a user to construct a variety of ordinary original machine learning algorithms. The data-flow diagram of the original machine learning algorithm generated by the programmatic interface layer is sent to the data-flow diagram conversion layer for analyzing. In this embodiment, a logistic regression algorithm illustrated in FIG. 2 is taken an example of the original machine learning algorithm. The logistic regression algorithm is obtained by combining some operator interfaces provided by the programmatic interface layer. Definition methods, of a model prediction function defined in sixth line of code, a model loss function defined in tenth line of the code, and an optimization method defined in fifteenth line of the code in FIG. 2, are the same as an existing Google-JAX/Numpy programming method. Due to a front end of JAX uses a programmatic interface similar to Numpy library, it is very consistent with usage habits of a python machine learning developer. Based on this, the programmatic interface layer provided in this embodiment can support the existing mainstream deep learning framework and improve compatibility of the system.

It should may understood that, in addition to using Google-Jax as a data flow generation tool, the programmatic interface layer may also use other data flow generation tools, such as Tensor Flow, PyTorch and other deep learning frameworks. The programmatic interface layer may also customize a front-end interface and a data-flow diagram format.

Regarding the data-flow diagram conversion layer, refer to twenty-fifth line of the code in FIG. 2, which means entering the data-flow diagram conversion layer. Specifically, a value_and_secure function acts on another function, and an operation of conversion to the distributed privacy protection machine learning is performed on the data-flow diagram at a bottom of the another function. It may also be understood that the value_and_secure function is used to modify another function and trigger an operation of conversion to the distributed privacy protection for the another function. The value_and_secure function may modify a variety of functions, thereby bringing scalability. In addition, it should be noted that the update function illustrated in twenty-seventh line of FIG. 2 is executed independently by one participant in this embodiment. For this type of function that is executed independently by one participant, it may not be modified by value_and_secure, such that it is more convenient for the user to flexibly write a corresponding machine learning algorithm.

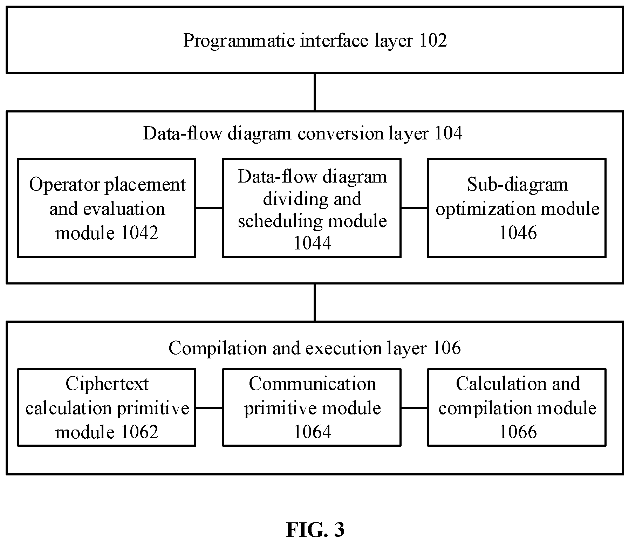

Referring to FIG. 3, the data-flow diagram conversion layer 104 includes the operator placement and evaluation module 1042 and the data-flow diagram dividing and scheduling module 1044, and also includes a data-flow diagram sub-diagram optimization module (referred to as a sub-diagram optimization module 1046 for short). By sequentially executing the operator placement and evaluation module 1042, the data-flow diagram dividing and scheduling module 1044 and the subgraph optimization module 1046 in the data-flow diagram conversion layer, the data-flow diagram of the original machine learning algorithm is converted to the data-flow diagram of a corresponding high-performance distributed privacy protection machine learning algorithm.

The operator placement and evaluation module is configured to calculate placement costs of each operator in the data-flow diagram when the operator is executed by different participants.

For any operator in the data-flow diagram, the operator placement and evaluation module is specifically configured to implement following step 1 and step 2.

In step 1, calculate an operator calculation cost of the operator, a communication cost of the source operand in the operator, and a calculation cost of the source operand in the operator by using a preset cost performance model.

The operator calculation cost indicates a calculation cost of calculation of the operator in plaintext or ciphertext.

The communication cost of the source operand indicates whether the source operand needs communication, whether encryption is needed for the source operand before communication and whether a communication object that communicates with the source operand is plaintext or ciphertext. When the source operand in the operator leaks private data of other participant, the source operand is encrypted by means of multi-party secure calculation and/or cryptography. In this case, the communication cost of the source operand may be calculated.

In this embodiment, the cost performance model may be a static model, that is, it is considered that the operator calculation cost, the communication cost of the source operand, and the calculation cost of the source operand are known in advance, and the above cost may be statically analyzed. The above static model is for example offline module in PORPLE performance model. The cost performance model may also be a dynamic model, that is, it is considered that the operator calculation cost, the communication cost of the source operand, and the calculation cost of the source operand need to be analyzed in real time during operation and they may change in real time during operation. The above dynamic model is for example online module of the PORPLE performance model.

In step 2, determine placement costs of the operator when the operator is executed by different participants based on the operator calculation cost, the communication cost of the source operand and the calculation cost of the source operand.

Following execution costs, including the operator calculation cost, the communication cost of the source operand, and the calculation cost of the source operand, of each operator corresponding to each participant are calculated by using the cost performance model and are calculated according to a way of dynamic programming and are calculated along a dependency relationship in the data-flow diagram. Then, a sum of the above three execution costs may be determined as the placement cost.

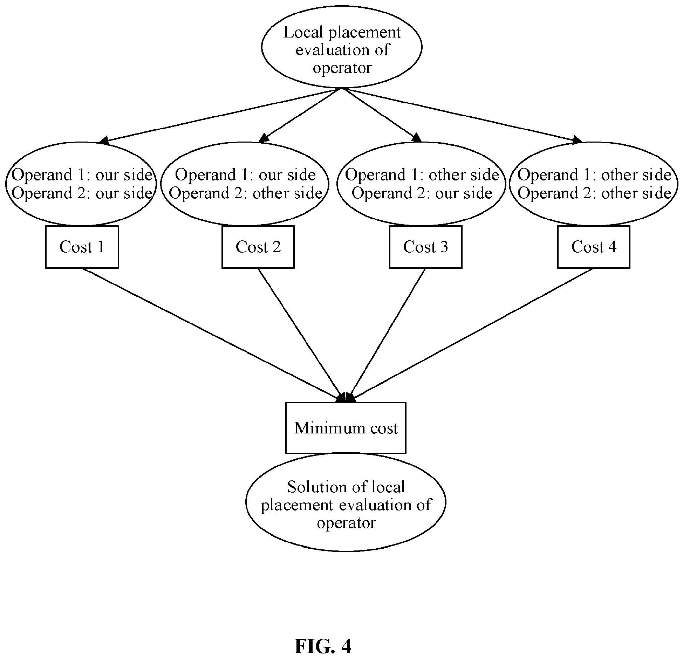

A method for determining the placement cost by using the cost performance model is illustrated in FIG. 4. According to a source of the source operand, there are 2ⁿ possibilities for the placement cost of the operator, where n is the number of the source operands in the operator. For example, FIG. 4 illustrate a case of an operator with two source operands, and there are four possibilities for the placement cost. The cost performance model may determine the minimum placement cost as a target placement cost.

In practice, there may be a scenario where the placement cost cannot be calculated. The incalculable placement cost means that a current placement method is not achievable. For example, for a first participant of two participants interacting with each other, when the operator is executed locally and the two source operands come from a second participant and the two source operands are performed with homomorphic encryption and the operator is not supported by a homomorphic encryption algorithm, the placement cost of the operator cannot be calculated and can be specifically expressed as infinity.

The data-flow diagram dividing and scheduling module is configured to divide the data-flow diagram into multiple sub-diagrams according to the placement costs, and schedule each of the sub-diagrams to a target participant for execution.

In an embodiment, the data-flow diagram dividing and scheduling module implements following steps (1) to (4) to achieve dividing and scheduling of a data-flow diagram.

In step (1), traverse all the operators in the data-flow diagram according to a breadth-first search algorithm; and for any operator, determine a target participant for executing the operator according to a minimum placement cost of the operator. The determined target participant for executing the operator may also be referred to as a placement position of the operator.

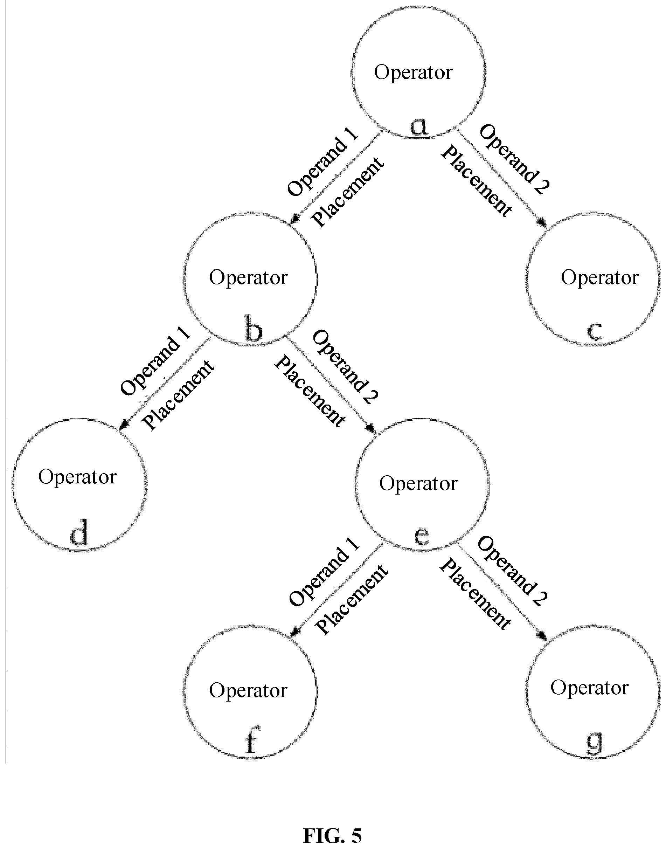

There are multiple possibilities for the placement position of each operator. In this embodiment, the minimum placement cost is selected from the multiple placement costs, to determine the target participant for executing the operator. After all the operators in the data-flow diagram are traversed by using the breadth-first search algorithm, the placement position of each operator with the minimum placement cost may be determined, so that entire cost of the data-flow diagram is minimized. Referring to FIG. 5, a root node (such as operator a) represents a target output whose calculation position is predetermined. The placement position of the operator is determined by selecting the minimum placement cost of the operator. After determining the placement position of the source operand (that is, output results of operators b and c) in operator a, because the source operand is also an output of another operator (in this case, the operators b and c), a calculation position of the another operator (in this case, the operators b and c) may be determined. By analogy, the breadth-first search algorithm is used to traverse all operators in the data-flow diagram and determine the target participant of each operator.

In step (2), mark, in a process of the traversing, the target participant corresponding to each of the operators in sequence to obtain marking information. The marking information indicates a correspondence between the operators and the target participants and indicates a topological order in which the operators are traversed.

In step (3), divide the data-flow diagram into multiple sub-diagrams according to the marking information. Each sub-diagram includes multiple operators which are corresponding to the same target participant and which are consecutive after the operators are topologically ordered.

In step (4), schedule, for each of the sub-diagrams, the target participant corresponding to the sub-diagram to execute the sub-diagram according to the marking information.

The marking information can reflect a topological order in which the operators are traversed, therefore, scheduling the sub-diagrams according to the marking information can ensure an execution order of the data-flow diagram. The data-flow diagram dividing and scheduling module adopts the topological order to ensure execution dependence, and can perform sequence change processing on the operators in the data-flow diagram while ensuring the topological order, which also facilitates compilation and optimization of subsequent data-flow diagrams.

In a process of calculating the communication cost of the source operand, in a scenario where the source operand needs communication and the communication is divided into general communication (that is, non-encrypted communication, usually directly referred to as communication) and encrypted communication, the data-flow diagram dividing and scheduling module in this embodiment may also be configured to:
add, if it is determined that the source operand in a current operator needs communication (this communication is the aforementioned general communication) in a process of calculating the communication cost of the source operand, a communication operator before a calculation process of the current operator to obtain a new operator, where the communication operator is an operator added to the source operand; and transform a sub-diagram containing the new operator based on the new operator;
add, if it is determined that the source operand in the current operator needs encrypted communication in the process of calculating the communication cost of the source operand, an encryption operator before the added communication operator to obtain a new operator, where the encryption operator is an operator added before the communication operator of the source operand based on the added communication operator; and transform a sub-diagram containing the new operator based on the new operator.

In this embodiment, the multi-party secure computing/cryptographic communication operator is added, and the sub-diagram is transformed in a multi-party secure computing/cryptographic mode to protect data privacy. The new operator obtained by the adding operation or the transforming operation together with the sub-diagrams of the data-flow diagram obtained by dividing express the distributed privacy protection machine learning process.

The sub-diagram optimization module is configured to optimize a plaintext calculation part of the sub-diagram. The sub-diagram optimization module may reuse a data-flow diagram optimization module in the mainstream deep learning framework, and perform data-flow diagram optimization processing such as common sub-expression elimination and operand fusion on the plaintext calculation part of the sub-diagram. The above-mentioned data-flow diagram optimization module may have multiple implementations, such as TVM and TASO.

A realization function of the compilation and execution layer is provided in this embodiment. The compilation and execution layer is configured to compile the sub-diagrams into a new data-flow diagram based on a greedy algorithm strategy, and generate an instruction for each operator in the new data-flow diagram to obtain the distributed privacy protection machine learning algorithm.

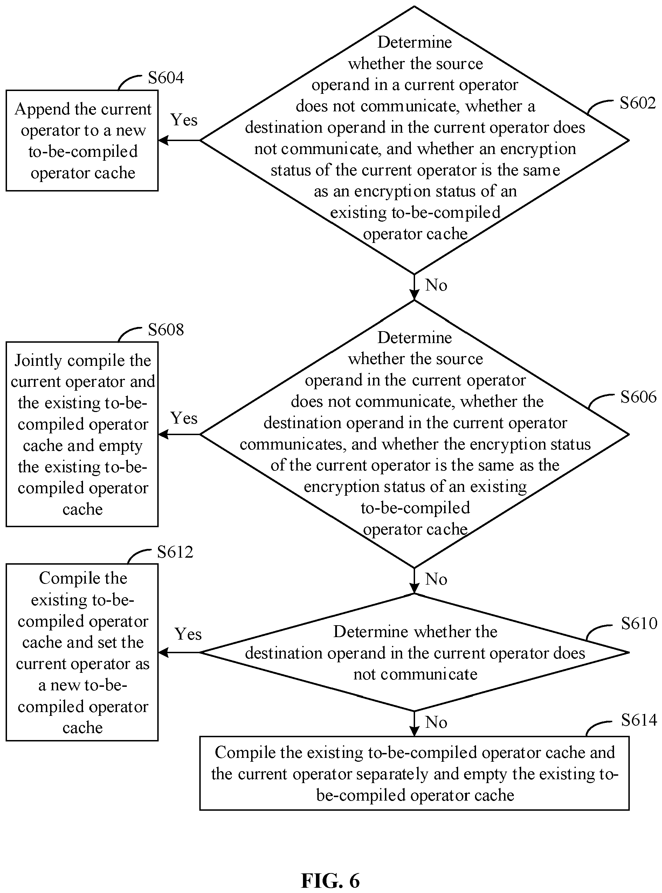

The compilation and execution layer compiles the sub-diagrams in the new data-flow diagram one by one in the topological order based on the greedy algorithm strategy, and maximizing the number of operators in each backend. A flow of a compilation method is illustrated in FIG. 6, that is, based on the greedy algorithm strategy, the following compilation operations (i.e., steps S602 to S614) are performed on each of the operators in the new data-flow diagram.

In step S602, determine whether the source operand in a current operator does not communicate, whether a destination operand in the current operator does not communicate, and whether an encryption status of the current operator is the same as an encryption status of an existing to-be-compiled operator cache.

If all determination results in step S602 are positive determinations, the following step S604 is executed, otherwise, the following steps S606 to S614 are executed.

In step S604, append the current operator to a new to-be-compiled operator cache, in a case that the source operand in the current operator does not communicate, the destination operand in the current operator does not communicate and the encryption status of the current operator is the same as the encryption status of the existing to-be-compiled operator cache (for example, both the encryption status of the current operator and the encryption status of the existing to-be-compiled operator cache are an encrypted status or a non-encrypted status).

In step S606, determine whether the source operand in the current operator does not communicate, whether the destination operand in the current operator communicates, and whether the encryption status of the current operator is the same as the encryption status of an existing to-be-compiled operator cache. If all determination results in step S606 are positive determinations, the following step S608 is executed, otherwise, the following steps S610 to S614 are executed.

In step S608, jointly compile the current operator and the existing to-be-compiled operator cache and empty the existing to-be-compiled operator cache, in a case that the source operand in the current operator does not communicate, the destination operand in the current operator communicates and the encryption status of the current operator is the same as the encryption status of the existing to-be-compiled operator cache.

In step S610, determine whether the destination operand in the current operator does not communicate. The following step S612 is executed in a case that the destination operand in the current operator does not communicate. The following step S614 is executed in a case that the destination operand in the current operator communicates.

In step S612, compile the existing to-be-compiled operator cache and set the current operator as a new to-be-compiled operator cache in a case that the destination operand in the current operator does not communicate.

In step S614, compile the existing to-be-compiled operator cache and the current operator separately and empty the existing to-be-compiled operator cache in a case that the destination operand in the current operator communicates.

It can be seen from the above steps that the operators compiled by the current executable back-end includes the currently analyzed operators as much as possible, unless there is a communication need, such as the source operand needs to communicate, or the back-end changes, such as plaintext calculation is performed in the to-be-compiled operator cache, while ciphertext calculation is performed in the current operator.

As illustrated in FIG. 3, the compilation and execution layer may include: a ciphertext calculation primitive module 1062, a communication primitive module 1064, and a calculation and compilation module 1066.

The ciphertext calculation primitive module is configured to generate a calculation instruction for a first target operator in the new data-flow diagram by using a semi-homomorphic encryption algorithm library (such as Paillier, HELib, and MicroSoft-Seal homomorphic encryption algorithm library) or a fully homomorphic encryption algorithm library. The first target operator is an operator on which encryption/decryption calculation and/or ciphertext calculation is to be performed.

The communication primitive module is configured to generate a calculation instruction for a second target operator by using a communication library (such as gRPC, MPI, ZeroMQ, and Socket communication library). The second target operator is an operator used for communication between different participants.

The calculation and compilation module is configured to generate a calculation instruction for a third target operator by using a preset compilation tool. The third target operator is an operator on which plaintext calculation is to be performed. A compilation object of the calculation and compilation module is the operator on which plaintext calculation is to be performed, which implements ordinary compilation work, therefore, the calculation and compilation module may also be referred to as an ordinary calculation and compilation module.

From the above, the above embodiment describes the system for converting the machine learning algorithm provided for vertical data segmentation scenarios, which expresses a relationship between an ordinary original machine learning algorithm and the corresponding distributed privacy protection machine learning algorithm from a perspective of the underlying data-flow diagram, and completes the automatic conversion between the ordinary original machine learning algorithm and the corresponding distributed privacy protection machine learning algorithm through the data-flow diagram conversion. The data-flow diagram conversion is universal and can be adapted to multiple upper layer machine learning algorithms, reuse the existing mainstream deep learning framework to develop the machine learning algorithm process, and improve compatibility. From the perspective of the data-flow diagram, distributed privacy protection conversion may be understood as dividing the entire data-flow diagram into several sub-diagrams and distributing the sub-diagrams to participants, and ensuring that an interactive part (i.e., a communication part) of the sub-diagrams is carried out in a privacy-protected manner. Further, the system can adapt to a compilation and optimization method of the existing deep learning framework, and analyze an execution cost of the privacy protection machine learning algorithm in multiple participants through the model, thereby improving the calculation performance of the algorithm.

### Embodiment 2

Based on the system for converting the machine learning algorithm provided by the foregoing embodiment, a method for converting a machine learning algorithm is provided by this embodiment. The method includes: constructing a data-flow diagram of an original machine learning algorithm based on a preset data flow generation tool, where, the data flow generation tool includes a Google-JAX computing framework, and the data-flow diagram includes a series of operators; calculating placement costs of each operator in the data-flow diagram when the operator is executed by different participants; dividing the data-flow diagram into multiple sub-diagrams according to the placement costs, and scheduling each of the sub-diagrams to a target participant for execution; and compiling the sub-diagrams into a new data-flow diagram based on a greedy algorithm strategy, and generating an instruction for each operator in the new data-flow diagram to obtain a distributed privacy protection machine learning algorithm.

Implementation principles and technical effects of the method provided in this embodiment are the same as those of the foregoing embodiment. For a brief description, for the parts not mentioned in the method embodiment, please refer to the corresponding content in the foregoing system embodiment.

Furthermore, an electronic device is also provided in the embodiments of the present disclosure. The system for converting the machine learning algorithm according to embodiment 1 is provided on the electronic device.

It should be noted that the terms "first", "second" and the like in the description are used for distinguishing an entity or operation from another entity or operation, but not intended to describe an actual relationship or order between these entities or operations. The terms "include", "comprise" or any other variations are intended to cover non-exclusive "include", thus a process, a method, an object or a device including a series of elements not only include the listed elements, but also include other elements not explicitly listed, or also include inherent elements of the process, the method, the object or the device. Without more limitations, a element defined by a sentence "include one..." does not exclude a case that there is another same element in the process, the method, the object or the device including the described element.

The above are only specific implementations of the present disclosure, so that those skilled in the art can understand or implement the present disclosure. It is obvious for those skilled in the art to make many modifications to these embodiments. The general principle defined herein may be applied to other embodiments without departing from the scope of the present disclosure. Therefore, the present disclosure is not limited to the embodiments illustrated herein, but should be defined by the broadest scope consistent with the principle and novel features disclosed herein.

## Claims

1. A system for converting a machine learning algorithm, comprising: a programmatic interface layer (102), a data-flow diagram conversion layer (104), and a compilation and execution layer (106) arranged from top to bottom, wherein the data-flow diagram conversion layer (104) comprises an operator placement and evaluation module (1042) and a data-flow diagram dividing and scheduling module (1044),
the programmatic interface layer (102) is configured to construct a data-flow diagram of an original machine learning algorithm based on a preset data flow generation tool, wherein the data flow generation tool comprises a Google-Java API for XML, Google-JAX, computing framework, and the data-flow diagram comprises a series of operators;
the operator placement and evaluation module (1042) is configured to calculate placement costs of each operator in the data-flow diagram when the operator is executed by different participants;
the data-flow diagram dividing and scheduling module (1044) is configured to divide the data-flow diagram into a plurality of sub-diagrams according to the placement costs, and schedule each of the sub-diagrams to a target participant for execution; and
the compilation and execution layer (106) is configured to compile the sub-diagrams into a new data-flow diagram based on a greedy algorithm strategy, and generate an instruction for each operator in the new data-flow diagram to obtain a distributed privacy protection machine learning algorithm.

2. The system according to claim 1, wherein the operator comprises a source operand, for any one of the operators in the data-flow diagram, the operator placement and evaluation module (1042) is further configured to:
calculate an operator calculation cost of the operator, a communication cost of the source operand in the operator, and a calculation cost of the source operand in the operator by using a preset cost performance model, wherein, the operator calculation cost indicates a calculation cost of calculation of the operator in plaintext or ciphertext, the communication cost of the source operand indicates whether the source operand needs communication and whether an communication object is plaintext or ciphertext; and
determine placement costs of the operator when the operator is executed by different participants based on the operator calculation cost, the communication cost of the source operand and the calculation cost of the source operand.

3. The system according to claim 1, wherein the data-flow diagram dividing and scheduling module (1044) is further configured to:
traverse all the operators in the data-flow diagram according to a breadth-first search algorithm; and for any operator, determine a target participant for executing the operator according to a minimum placement cost of the operator;
mark, in a process of the traversing, the target participant corresponding to each of the operators in sequence to obtain marking information, wherein the marking information indicates a correspondence between the operators and the target participants and indicates a topological order in which the operators are traversed;
divide the data-flow diagram into a plurality of sub-diagrams according to the marking information, wherein each sub-diagram comprises a plurality of the operators which are corresponding to the same target participant and which are consecutive after the operators are topologically ordered; and
schedule, for each of the sub-diagrams, the target participant corresponding to the sub-diagram to execute the sub-diagram according to the marking information.

4. The system according to claim 2, wherein the data-flow diagram dividing and scheduling module (1044) is further configured to:
add, if it is determined that the source operand in a current operator needs communication in a process of calculating the communication cost of the source operand, a communication operator before a calculation process of the current operator to obtain a new operator;
add, if it is determined that the source operand in the current operator needs encrypted communication in the process of calculating the communication cost of the source operand, an encryption operator before the added communication operator to obtain a new operator; and
transform a sub-diagram containing the new operator based on the new operator.

5. The system according to claim 1, wherein the data-flow diagram conversion layer (104) further comprises a sub-diagram optimization module (1046) configured to optimize a plaintext calculation part of the sub-diagram.

6. The system according to claim 1, wherein the compilation and execution layer (106) comprises:
a ciphertext calculation primitive module (1062) configured to generate a calculation instruction for a first target operator in the new data-flow diagram by using a semi-homomorphic encryption algorithm library or a fully homomorphic encryption algorithm library, wherein the first target operator is an operator on which at least one of encryption/decryption calculation and ciphertext calculation is to be performed;
a communication primitive module (1064) configured to generate a calculation instruction for a second target operator by using a communication library, wherein the second target operator is an operator used for communication between different participants; and
a calculation and compilation module (1066) configured to generate a calculation instruction for a third target operator by using a preset compilation tool, wherein the third target operator is an operator on which plaintext calculation is to be performed.

7. The system according to claim 1, wherein the compilation and execution layer (106) is further configured to perform following compiling operations on each of the operators in the new data-flow diagram based on the greedy algorithm strategy:
determining whether the source operand in a current operator communicates, whether a destination operand in the current operator communicates and whether an encryption status of the current operator is the same as an encryption status of an existing to-be-compiled operator cache (S602), wherein the destination operand is a result operand calculated from the source operand in the operator;
appending the current operator to a new to-be-compiled operator cache (S604), in a case that the source operand in the current operator does not communicate, the destination operand in the current operator does not communicate and the encryption status of the current operator is the same as the encryption status of the existing to-be-compiled operator cache;
jointly compiling the current operator and the existing to-be-compiled operator cache and emptying the existing to-be-compiled operator cache (S608), in a case that the source operand in the current operator does not communicate, the destination operand in the current operator communicates and the encryption status of the current operator is the same as the encryption status of the existing to-be-compiled operator cache;
compiling the existing to-be-compiled operator cache and setting the current operator as a new to-be-compiled operator cache (S612), in a case that the source operand in the current operator does not communicate, the destination operand in the current operator does not communicate and the encryption status of the current operator is different from the encryption status of the existing to-be-compiled operator cache, or in a case that the source operand in the current operator communicates, the destination operand in the current operator does not communicate and the encryption status of the current operator is different from the encryption status of the existing to-be-compiled operator cache, or in a case that the source operand in the current operator communicates, the destination operand in the current operator does not communicate and the encryption status of the current operator is the same as the encryption status of the existing to-be-compiled operator cache;
compiling the existing to-be-compiled operator cache and the current operator separately and emptying the existing to-be-compiled operator cache (S614), in a case that the source operand in the current operator does not communicate, the destination operand in the current operator communicates and the encryption status of the current operator is different from the encryption status of the existing to-be-compiled operator cache, or in a case that the source operand in the current operator communicates, the destination operand in the current operator communicates and the encryption status of the current operator is different from the encryption status of the existing to-be-compiled operator cache, or in a case that the source operand in the current operator communicates, the destination operand in the current operator communicates and the encryption status of the current operator is the same as the encryption status of the existing to-be-compiled operator cache.

8. A computer implemented method for converting a machine learning algorithm, comprising:
constructing a data-flow diagram of an original machine learning algorithm based on a preset data flow generation tool, wherein, the data flow generation tool comprises a Google-Java API for XML, Google-JAX, computing framework, and the data-flow diagram comprises a series of operators;
calculating placement costs of each operator in the data-flow diagram when the operator is executed by different participants;
dividing the data-flow diagram into a plurality of sub-diagrams according to the placement costs, and scheduling each of the sub-diagrams to a target participant for execution; and
compiling the sub-diagrams into a new data-flow diagram based on a greedy algorithm strategy, and generating an instruction for each operator in the new data-flow diagram to obtain a distributed privacy protection machine learning algorithm.

9. An electronic device comprising the system for converting a machine learning algorithm according to any one of claims 1 to 7.

## Patentansprüche

1. System zum Umwandeln eines Maschinenlernalgorithmus, das Folgendes umfasst: eine programmatische Schnittstellenschicht (102), eine Datenflussdiagrammumwandlungsschicht (104) und eine Kompilierungs- und Ausführungsschicht (106), die von oben nach unten angeordnet sind, wobei die Datenflussdiagrammumwandlungsschicht (104) ein Operatorplatzierungs- und -beurteilungsmodul (1042) und ein Datenflussdiagrammteilungs- und -planungsmodul (1044) umfasst,
die programmatische Schnittstellenschicht (102) ist dazu ausgelegt, auf Basis eines voreingestellten Datenflusserzeugungswerkzeugs ein Datenflussdiagramm eines ursprünglichen Maschinenlernalgorithmus zu konstruieren, wobei das Datenflusserzeugungswerkzeug ein Google-Java-API für XML(Google-JAX)-Berechnungsframework umfasst und das Datenflussdiagramm eine Reihe von Operatoren umfasst;
das Operatorplatzierungs- und -beurteilungsmodul (1042) ist dazu ausgelegt, Platzierungskosten jedes Operators im Datenflussdiagramm zu berechnen, wenn der Operator von verschiedenen Teilnehmern ausgeführt wird;
das Datenflussdiagrammteilungs- und -planungsmodul (1044) ist dazu ausgelegt, das Datenflussdiagramm gemäß den Platzierungskosten in eine Vielzahl von Unterdiagrammen zu teilen und jedes der Unterdiagramme für einen Zielteilnehmer zur Ausführung zu planen; und
die Kompilierungs- und Ausführungsschicht (106) ist dazu ausgelegt, die Unterdiagramme auf Basis einer Greedy-Algorithmusstrategie in einem neuen Datenflussdiagramm zu kompilieren und eine Anweisung für jeden Operator im neuen Datenflussdiagramm zu erzeugen, um einen verteilten Datenschutzmaschinenlernalgorithmus zu erhalten.

2. System nach Anspruch 1, wobei der Operator für jeden der Operatoren im Datenflussdiagramm einen Quelloperanden umfasst und das Operatorplatzierungs- und -beurteilungsmodul (1042) ferner zu Folgendem ausgelegt ist:
Berechnen von Operatorberechnungskosten des Operators, Kommunikationskosten des Quelloperanden im Operator und Berechnungskosten des Quelloperanden im Operator unter Verwendung eines voreingestellten Kostenleistungsmodells, wobei die Operatorberechnungskosten Berechnungskosten einer Berechnung des Operators in Klartext oder Chiffretext anzeigen, die Kommunikationskosten des Quelloperanden anzeigen, ob der Quelloperand eine Kommunikation benötigt und ob ein Kommunikationsobjekt Klartext oder Chiffretext ist; und
Bestimmen von Platzierungskosten des Operators, wenn der Operator von verschiedenen Teilnehmern ausgeführt wird, auf Basis der Operatorberechnungskosten, der Kommunikationskosten des Quelloperanden und der Berechnungskosten des Quelloperanden.

3. System nach Anspruch 1, wobei das Datenflussdiagrammteilungs- und -planungsmodul (1044) ferner zu Folgendem ausgelegt ist:
Durchlaufen aller Operatoren im Datenflussdiagramm gemäß einem Breite-zuerst-Suchalgorithmus; und für jeden Operator, Bestimmen eines Zielteilnehmers zum Ausführen des Operators gemäß Platzierungsmindestkosten des Operators;
in einem Prozess des Durchlaufens Markieren des Zielteilnehmers, der jedem der Operatoren entspricht, in Folge, um Markierungsinformationen zu erhalten, wobei die Markierungsinformationen eine Entsprechung zwischen den Operatoren und den Zielteilnehmern anzeigen sowie eine topologische Reihenfolge anzeigen, in der die Operatoren durchlaufen werden;
Teilen des Datenflussdiagramms gemäß den Markierungsinformationen in eine Vielzahl von Unterdiagrammen, wobei jedes Unterdiagramm eine Vielzahl von Operatoren umfasst, die demselben Zielteilnehmer entsprechen und die aufeinanderfolgend sind, nachdem die Operatoren topologisch geordnet wurden; und
Planen des Zielteilnehmers der dem Unterdiagramm entspricht, für jedes der Unterdiagramme, um das Unterdiagramm gemäß den Markierungsinformationen auszuführen.

4. System nach Anspruch 2, wobei das Datenflussdiagrammteilungs- und -planungsmodul (1044) ferner zu Folgendem ausgelegt ist:
wenn in einem Prozess des Berechnens der Kommunikationskosten des Quelloperanden bestimmt wird, dass der Quelloperand in einem aktuellen Operator eine Kommunikation benötigt, Hinzufügen eines Kommunikationsoperators vor einem Berechnungsprozess des aktuellen Operators, um einen neuen Operator zu erhalten;
wenn im Prozess des Berechnens der Kommunikationskosten des Quelloperanden bestimmt wird, dass der Quelloperand im aktuellen Operator eine verschlüsselte Kommunikation benötigt, Hinzufügen eines Verschlüsselungsoperators vor dem hinzugefügten Kommunikationsoperator, um einen neuen Operator zu erhalten; und
Transformieren eines Unterdiagramms, das den neuen Operator enthält, auf Basis des neuen Operators.

5. System nach Anspruch 1, wobei die Datenflussdiagrammumwandlungsschicht (104) ferner ein Unterdiagrammoptimierungsmodul (1046) umfasst, das dazu ausgelegt ist, einen Klartextberechnungsteil des Unterdiagramms zu optimieren.

6. System nach Anspruch 1, wobei die Kompilierungs- und Ausführungsschicht (106) Folgendes umfasst:
ein primitives Chiffretextberechnungsmodul (1062), das dazu ausgelegt ist, unter Verwendung einer semihomomorphen Verschlüsselungsalgorithmusbibliothek oder einer vollständig homomorphen Verschlüsselungsalgorithmusbibliothek eine Berechnungsanweisung für einen ersten Zieloperator im neuen Datenflussdiagramm zu erzeugen, wobei der erste Zieloperator ein Operator ist, an dem mindestens eines von einer Verschlüsselungs-/Entschlüsselungsberechnung und einer Chiffretextberechnung durchzuführen ist;
ein primitives Kommunikationsmodul (1064), das dazu ausgelegt ist, unter Verwendung einer Kommunikationsbibliothek eine Berechnungsanweisung für einen zweiten Zieloperator zu erzeugen, wobei der zweite Zieloperator ein Operator ist, der für eine Kommunikation zwischen verschiedenen Teilnehmern verwendet wird; und
ein Berechnungs- und Kompilierungsmodul (1066), das dazu ausgelegt ist, unter Verwendung eines voreingestellten Kompilierungswerkzeugs eine Berechnungsanweisung für einen dritten Zieloperator zu erzeugen, wobei der dritte Zieloperator ein Operator ist, an dem eine Klartextberechnung durchzuführen ist.

7. System nach Anspruch 1, wobei die Kompilierungs- und Ausführungsschicht (106) ferner dazu ausgelegt ist, an jedem der Operatoren im neuen Datenflussdiagramm auf Basis der Greedy-Algorithmusstrategie die folgenden Kompilierungsoperationen durchzuführen:
Bestimmen, ob der Quelloperand in einem aktuellen Operator kommuniziert, ob ein Zieloperand im aktuellen Operator kommuniziert und ob ein Verschlüsselungsstatus des aktuellen Operators derselbe ist wie ein Verschlüsselungsstatus eines existierenden zu kompilierenden Operatorcaches (S602), wobei der Zieloperand ein Resultatsoperand ist, der aus dem Quelloperanden im Operator berechnet wird;
in einem Fall, in dem der Quelloperand im aktuellen Operator nicht kommuniziert, der Zieloperand im aktuellen Operator nicht kommuniziert und der Verschlüsselungsstatus des aktuellen Operators derselbe ist wie der Verschlüsselungsstatus eines existierenden zu kompilierenden Operatorcaches, Anhängen des aktuellen Operators an den neuen zu kompilierenden Operatorcache (S604);
in einem Fall, in dem der Quelloperand im aktuellen Operator nicht kommuniziert, der Zieloperand im aktuellen Operator kommuniziert und der Verschlüsselungsstatus des aktuellen Operators derselbe ist wie in der Verschlüsselungsstatus eines existierenden zu kompilierenden Operatorcaches, gemeinsames Kompilieren des aktuellen Operators und des existierenden zu kompilierenden Operatorcaches und Entleeren des existierenden zu kompilierenden Operatorcaches (S608);
in einem Fall, in dem der Quelloperand im aktuellen Operator nicht kommuniziert, der Zieloperand im aktuellen Operator nicht kommuniziert und der Verschlüsselungsstatus des aktuellen Operators sich vom Verschlüsselungsstatus des existierenden zu kompilierenden Operatorcaches unterscheidet, oder in einem Fall, in dem der Quelloperand im aktuellen Operator kommuniziert, der Zieloperand im aktuellen Operator nicht kommuniziert und der Verschlüsselungsstatus des aktuellen Operators sich vom Verschlüsselungsstatus des existierenden zu kompilierenden Operatorcaches unterscheidet, oder in einem Fall, in dem der Quelloperand im aktuellen Operator kommuniziert, der Zieloperand im aktuellen Operator nicht kommuniziert und der Verschlüsselungsstatus des aktuellen Operators derselbe ist wie der Verschlüsselungsstatus des existierenden zu kompilierenden Operatorcaches, Kompilieren des existierenden zu kompilierenden Operatorcaches und Einstellen des aktuellen Operators als einen neuen zu kompilierenden Operatorcache (S612);
in einem Fall, in dem der Quelloperand im aktuellen Operator nicht kommuniziert, der Zieloperand im aktuellen Operator kommuniziert und der Verschlüsselungsstatus des aktuellen Operators sich vom Verschlüsselungsstatus des existierenden zu kompilierenden Operatorcaches unterscheidet, oder in einem Fall, in dem der Quelloperand im aktuellen Operator kommuniziert, der Zieloperand im aktuellen Operator kommuniziert und der Verschlüsselungsstatus des aktuellen Operators sich vom Verschlüsselungsstatus des existierenden zu kompilierenden Operatorcaches unterscheidet, oder in einem Fall, in dem der Quelloperand im aktuellen Operator kommuniziert, der Zieloperand im aktuellen Operator kommuniziert und der Verschlüsselungsstatus des aktuellen Komparators derselbe ist wie der Verschlüsselungsstatus des existierenden zu kompilierenden Operatorcaches, separates Kompilieren des existierenden zu kompilierenden Operatorcaches und des aktuellen Operators und Entleeren existierenden zu kompilierenden Operatorcaches (S614).

8. Computerimplementiertes Verfahren zum Umwandeln eines Maschinenlernalgorithmus, das Folgendes umfasst:
Konstruieren eines Datenflussdiagramms eines ursprünglichen Maschinenlernalgorithmus auf Basis eines voreingestellten Datenflusserzeugungswerkzeugs, wobei das Datenflusserzeugungswerkzeug ein Google-Java-API für XML(Google-JAX)-Berechnungsframework umfasst und das Datenflussdiagramm eine Reihe von Operatoren umfasst;
Berechnen von Platzierungskosten jedes Operators im Datenflussdiagramm, wenn der Operator von verschiedenen Teilnehmern ausgeführt wird;
Teilen des Datenflussdiagramms gemäß den Platzierungskosten in eine Vielzahl von Unterdiagrammen und Planen jedes der Unterdiagramme für einen Zielteilnehmer zur Ausführung; und
Kompilieren der Unterdiagramme auf Basis einer Greedy-Algorithmusstrategie in ein neues Datenflussdiagramm und Erzeugen einer Anweisung für jeden Operator im neuen Datenflussdiagramm, um einen verteilten Datenschutzmaschinenlernalgorithmus zu erhalten.

9. Elektronische Vorrichtung, die das System zum Umwandeln eines Maschinenlernalgorithmus nach einem der Ansprüche 1 bis 7 umfasst.

## Revendications

1. Système de conversion d'un algorithme d'apprentissage automatique, comprenant : une couche d'interface programmatique (102), une couche de conversion de diagramme de flux de données (104), et une couche de compilation et d'exécution (106) agencée de haut en bas, dans lequel la couche de conversion de diagramme de flux de données (104) comprend un module de placement et d'évaluation d'opérateur (1042) et un module de division et d'ordonnancement de diagramme de flux de données (1044),
la couche d'interface programmatique (102) est configurée pour construire un diagramme de flux de données d'un algorithme d'apprentissage automatique original sur la base d'un outil de génération de flux de données prédéfini, dans lequel l'outil de génération de flux de données comprend un cadre informatique Google-JAX (API Google-Java pour XML), et le diagramme de flux de données comprend une série d'opérateurs ;
le module de placement et d'évaluation d'opérateur (1042) est configuré pour calculer les coûts de placement de chaque opérateur dans le diagramme de flux de données lorsque l'opérateur est exécuté par différents participants ;
le module de division et d'ordonnancement de diagramme de flux de données (1044) est configuré pour diviser le diagramme de flux de données en une pluralité de sous-diagrammes selon les coûts de placement, et ordonnancer chacun des sous-diagrammes à un participant cible pour l'exécution ; et
la couche de compilation et d'exécution (106) est configurée pour compiler les sous-diagrammes en un nouveau diagramme de flux de données sur la base d'une stratégie d'algorithme gourmand, et générer une instruction pour chaque opérateur dans le nouveau diagramme de flux de données pour obtenir un algorithme d'apprentissage automatique de protection de la vie privée distribué.

2. Système selon la revendication 1, dans lequel l'opérateur comprend un opérande source, pour n'importe lequel des opérateurs dans le diagramme de flux de données, le module de placement et d'évaluation d'opérateur (1042) est en outre configuré pour :
calculer un coût de calcul d'opérateur de l'opérateur, un coût de communication de l'opérande source dans l'opérateur et un coût de calcul de l'opérande source dans l'opérateur en utilisant un modèle de performance de coût prédéfini, dans lequel le coût de calcul d'opérateur indique un coût de calcul du calcul de l'opérateur en texte en clair ou en texte chiffré, le coût de communication de l'opérande source indique si l'opérande source a besoin d'une communication et si un objet de communication est en texte en clair ou en texte chiffré ; et
déterminer les coûts de placement de l'opérateur lorsque l'opérateur est exécuté par différents participants sur la base du coût de calcul d'opérateur, du coût de communication de l'opérande source et du coût de calcul de l'opérande source.

3. Système selon la revendication 1, dans lequel le module de division et d'ordonnancement de diagramme de flux de données (1044) est en outre configuré pour :
parcourir tous les opérateurs dans le diagramme de flux de données selon un algorithme de recherche en largeur ; et pour tout opérateur, déterminer un participant cible pour l'exécution de l'opérateur selon un coût de placement minimum de l'opérateur ;
marquer, au cours d'un processus de traversée, le participant cible correspondant à chacun des opérateurs dans l'ordre pour obtenir des informations de marquage, dans lequel les informations de marquage indiquent une correspondance entre les opérateurs et les participants cibles et indiquent un ordre topologique dans lequel les opérateurs sont traversés ;
diviser le diagramme de flux de données en une pluralité de sous-diagrammes selon les informations de marquage, dans lequel chaque sous-diagramme comprend une pluralité d'opérateurs correspondant au même participant cible et qui sont consécutifs après classement topologique des opérateurs ; et
ordonnancer, pour chacun des sous-diagrammes, le participant cible correspondant au sous-diagramme pour exécuter le sous-diagramme selon les informations de marquage.

4. Système selon la revendication 2, dans lequel le module de division et d'ordonnancement de diagramme de flux de données (1044) est en outre configuré pour :
ajouter, s'il est déterminé que l'opérande source d'un opérateur courant a besoin d'une communication au cours d'un processus de calcul du coût de communication de l'opérande source, un opérateur de communication avant un processus de calcul de l'opérateur courant pour obtenir un nouvel opérateur ;
ajouter, s'il est déterminé que l'opérande source dans l'opérateur courant a besoin d'une communication cryptée au cours du processus de calcul du coût de communication de l'opérande source, un opérateur de cryptage avant l'opérateur de communication ajouté pour obtenir un nouvel opérateur ; et
transformer un sous-diagramme contenant le nouvel opérateur sur la base du nouvel opérateur.

5. Système selon la revendication 1, dans lequel la couche de conversion de diagramme de flux de données (104) comprend en outre un module d'optimisation de sous-diagramme (1046) configuré pour optimiser une partie de calcul de texte en clair du sous-diagramme.

6. Système selon la revendication 1, dans lequel la couche de compilation et d'exécution (106) comprend :
un module primitif de calcul de texte chiffré (1062) configuré pour générer une instruction de calcul pour un premier opérateur cible dans le nouveau diagramme de flux de données en utilisant une bibliothèque d'algorithmes de cryptage semi-homomorphe ou une bibliothèque d'algorithmes de cryptage entièrement homomorphe, dans lequel le premier opérateur cible est un opérateur sur lequel au moins un parmi un calcul de cryptage/décryptage et un calcul de texte chiffré doit être effectué ;
un module primitif de communication (1064) configuré pour générer une instruction de calcul pour un deuxième opérateur cible en utilisant une bibliothèque de communication, dans lequel le deuxième opérateur cible est un opérateur utilisé pour la communication entre différents participants ; et
un module de calcul et de compilation (1066) configuré pour générer une instruction de calcul pour un troisième opérateur cible en utilisant un outil de compilation prédéfini, dans lequel le troisième opérateur cible est un opérateur sur lequel un calcul de texte en clair doit être effectué.

7. Système selon la revendication 1, dans lequel la couche de compilation et d'exécution (106) est en outre configurée pour effectuer les opérations de compilation suivantes sur chacun des opérateurs dans le nouveau diagramme de flux de données sur la base de la stratégie d'algorithme gourmand :
déterminer si l'opérande source dans un opérateur courant communique, si un opérande de destination dans l'opérateur courant communique et si un statut de cryptage de l'opérateur courant est le même qu'un statut de cryptage d'un cache d'opérateur à compiler existant (S602), dans lequel l'opérande de destination est un opérande de résultat calculé à partir de l'opérande source dans l'opérateur ;
annexer l'opérateur courant à un nouveau cache d'opérateur à compiler (S604), dans le cas où l'opérande source dans l'opérateur courant ne communique pas, où l'opérande de destination dans l'opérateur courant ne communique pas et où le statut de cryptage de l'opérateur courant est le même que le statut de cryptage du cache d'opérateur à compiler existant ;
compiler conjointement l'opérateur courant et le cache d'opérateur à compiler existant et vider le cache d'opérateur à compiler existant (S608), dans le cas où l'opérande source dans l'opérateur courant ne communique pas, où l'opérande de destination dans l'opérateur courant communique et où le statut de cryptage de l'opérateur courant est le même que le statut de cryptage du cache d'opérateur à compiler existant ;
compiler le cache d'opérateur à compiler existant et définir l'opérateur courant comme nouveau cache d'opérateur à compiler (S612), dans le cas où l'opérande source dans l'opérateur courant ne communique pas, où l'opérande de destination dans l'opérateur courant ne communique pas et où le statut de cryptage de l'opérateur courant est différent du statut de cryptage du cache d'opérateur à compiler existant, ou dans le cas où l'opérande source dans l'opérateur courant communique, où l'opérande de destination dans l'opérateur courant ne communique pas et où le statut de cryptage de l'opérateur courant est différent du statut de cryptage du cache d'opérateur à compiler existant, ou dans le cas où l'opérande source dans l'opérateur courant communique, où l'opérande de destination dans l'opérateur courant ne communique pas et où le statut de cryptage de l'opérateur courant est le même que le statut de cryptage du cache d'opérateur à compiler existant ;
compiler séparément le cache d'opérateur à compiler existant et l'opérateur courant et vider le cache d'opérateur à compiler existant (S614), dans le cas où l'opérande source dans l'opérateur courant ne communique pas, où l'opérande de destination dans l'opérateur courant communique et où le statut de cryptage de l'opérateur courant est différent du statut de cryptage du cache d'opérateur à compiler existant, ou dans le cas où l'opérande source dans l'opérateur courant communique, où l'opérande de destination dans l'opérateur courant communique et où le statut de cryptage de l'opérateur courant est différent du statut de cryptage du cache d'opérateur à compiler existant, ou dans le cas où l'opérande source dans l'opérateur courant communique, où l'opérande de destination dans l'opérateur courant communique et où le statut de cryptage de l'opérateur courant est le même que le statut de cryptage du cache d'opérateur à compiler existant.

8. Procédé mis en œuvre par ordinateur pour convertir un algorithme d'apprentissage automatique, comprenant :
la construction d'un diagramme de flux de données d'un algorithme d'apprentissage automatique original sur la base d'un outil de génération de flux de données prédéfini, dans lequel, l'outil de génération de flux de données comprend un cadre informatique Google-JAX (API Google-Java pour XML), et le diagramme de flux de données comprend une série d'opérateurs ;
le calcul des coûts de placement de chaque opérateur dans le diagramme de flux de données lorsque l'opérateur est exécuté par différents participants ;
la division du diagramme de flux de données en une pluralité de sous-diagrammes selon les coûts de placement, et l'ordonnancement de chacun des sous-diagrammes à un participant cible pour l'exécution ; et
la compilation des sous-diagrammes en un nouveau diagramme de flux de données sur la base d'une stratégie d'algorithme gourmand, et la génération d'une instruction pour chaque opérateur dans le nouveau diagramme de flux de données pour obtenir un algorithme d'apprentissage automatique de protection de la vie privée distribué.

9. Dispositif électronique comprenant le système de conversion d'un algorithme d'apprentissage automatique selon l'une quelconque des revendications 1 à 7.
